# EUROPÄISCHE PATENTSCHRIFT

(11) **EP 1 587 893 B1**
(45) Veröffentlichungstag und Bekanntmachung des Hinweises auf die Patenterteilung: **03.10.2007**
(21) Anmeldenummer: 03789065.4
(22) Anmeldetag: 21.11.2003
(51) Int. Cl.: C09K 11/04, C09J 4/00, C08K 3/36

(54) **MATTER POLYMERISATIONSKLEBSTOFF**
MAT POLYMERIZATION GLUE
ADHESIF DE POLYMERISATION MATE

(30) Priorität: 21.01.2003 DE 10302416
(43) Veröffentlichungstag der Anmeldung: 26.10.2005
(73) Patentinhaber: Röhm GmbH, 64293 Darmstadt (DE)
(72) Erfinder: BLUMENSCHEIN, Michael, 64625 Bensheim (DE); SCHÜTZ, Carlo, 64409 Messel (DE); DANN, Xenia, 64579 Gernsheim (DE); SÄTTLER, Roland, 64372 Ober-Ramstadt (DE)
(74) Vertreter: Gottschalk, Michael
(86) Internationale Anmeldenummer: PCT/EP2003/013058
(87) Internationale Veröffentlichungsnummer: WO 2004/065519

(56) Entgegenhaltungen:
- PATENT ABSTRACTS OF JAPAN Bd. 2000, Nr. 13, 5. Februar 2001 (2001-02-05) & JP 2000 299326 A (SHIIMA DENSHI KK; TOAGOSEI CO LTD), 24. Oktober 2000 (2000-10-24)
- DATABASE WPI Section Ch, Week 199409 Derwent Publications Ltd., London, GB; Class A12, AN 1994-072083 XP002277699 & JP 06 025512 A (SUMITOMO BAKELITE CO) 1. Februar 1994 (1994-02-01)
- DATABASE WPI Section Ch, Week 199249 Derwent Publications Ltd., London, GB; Class A18, AN 1992-403477 XP002277700 & JP 04 300980 A (SEKISUI CHEM IND CO LTD) 23. Oktober 1992 (1992-10-23) in der Anmeldung erwähnt

## Beschreibung

### Gebiet der Erfindung

Aus ästhetischen sowie Design- bzw. lichttechnischen Gründen werden häufig nicht Klarglas-Scheiben für Möbel oder Gebäude verwendet, sondern Flächen aus mattiertem Glas. Mattiertes Glas wird durch Sandstrahlen, Ätzen oder Bekleben mit einer mattierten Folie hergestellt.

Auch transparente Kunststoffe können in geeigneter Weise mattiert werden. Ein Beispiel dafür ist mattiertes PMMA (Polymethylmethacrylat). PMMA kann ebenso wie Glas durch mechanische bzw. chemische Bearbeitung mattiert werden. Eine andere Methode ist das Polymerisieren von Methylmethacrylat (MMA) zwischen mattierten Glasscheiben. Bei der Extrusion von PMMA Formmassen lässt sich durch Zugabe von Lichtstreuperlen ebenfalls ein optisch matter Eindruck erzeugen. Beim Erkalten der Schmelze und dem damit verbundenen Schrumpfen an der Oberfläche bewirken die thermisch stabileren Lichtstreuperlen eine matt strukturierte Oberfläche.

Das Verkleben von mattierten Produkten, insbesondere Produkten aus PMMA, konnte bislang nur mit Polymerisationsklebstoffen vorgenommen werden.

Polymerisationsklebstoffe auf Basis von Polymethylmethacrylat-Basis sind bekannt und handelsüblich (siehe z. B. EP 548 740 oder EP 675 184). Es handelt sich dabei z. B. um Lösungen von Polymethylmethacrylat in Methylmethacrylat, einem sogenannten Sirup, der mittels eines Polymerisationsinitiators polymerisiert wird. Bei dem Polymerisationsinitiator handelt es sich um einen Radikalstarter, z. B. einen UV-Initiator, einen Redox-Initiator oder einen thermisch oder durch Licht aktivierbaren Radikalstarter. Der Klebstoff kann z. B. in eine V-Nut zwischen die zu verklebenden Teile eingebracht werden, wo er polymerisiert und zu einer besonders festen Verbindung führt.

Handelsüblich und somit analysierbar sind Mehrkomponenten-Klebstoffsysteme (z. B. ACRIFIX® 190, RÖHM GmbH & Co KG, D-64293 Darmstadt), bei denen der Polymethylmethacrylat/Methylmethacrylat-Sirup getrennt vom Polymerisationsinitiator, z. B. einem aromatischen Amin und einem Benzoylperoxid, vorliegt. Zur Verarbeitung werden beide Komponenten gemischt, vorzugsweise entgast, um Blasenbildungen vorzubeugen und anschließend zwischen die zu verklebenden Teile verbracht, wo das reaktive Gemisch zu einer festen Klebverbindung aushärtet. Die MehrkomponentenKlebstoffsysteme können zusätzlich katalysierende Verbindungen wie Metalloxide und/oder reaktionsverzögernde Verbindungen, wie z. B. Milchsäurederivate, enthalten, die in Kombination mit dem verwendeten Polymerisationsinitiator die Polymerisationsdauer und die Qualität der Klebverbindung beeinflussen.

Derartige Polymerisationsklebstoffe eignen sich zur Verklebung von Teilen, die z. B. aus Acrylnitril-Butadien-Styrol (ABS), Celluloseacetatbutyrat (CAB), Polystyrol (PS), Polycarbonat (PC), Polyvinylchlorid (PVC), Styrol/α -Styrol-Copolymer (S/MS), ungesättigtem Polyester (UP) oder Holz bestehen können, insbesondere aber für Teile aus PMMA.

Das Verkleben von mattiertem PMMA mit üblichen Polymerisationsklebstoffen führt zu hoch glänzenden Klebenähten, da die ausgehärteten Polymerisationsklebstoffe eine glänzende Oberfläche aufweisen. Gerade die Fügezonen, die der Betrachter von verklebten Produkten nicht wahrnehmen soll, werden dadurch betont.

Versuche, den optischen Eindruck zu verbessern sind in der JP 4,300,980 beschrieben. Dort werden dem Klebstoff Silica-Partikel von weniger als 100 nm Durchmesser zugesetzt, um dem ausgehärteten Klebstoff einen matten Eindruck zu verleihen.

Aufgabe der Erfindung ist es, einen an das Substrat angepassten unauffälligen Klebstoff zum Verkleben mattierter Produkte anzugeben.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

Erfindungsgemäß wird ein Klebstoff geschaffen, der nach dem Aushärten eine mattierte Oberfläche in Anpassung an die Mattigkeit von zu klebenden mattierten Produkten aufweist.

Der Klebstoff hat als Basis einen Polymerisationsklebstoff, vorzugsweise einen Klebstoff auf (Meth)acrylatbasis. Derartige Klebstoffe kleben insbesondere thermoplastische Kunststoffe.

Dem Polymerisationsklebstoff werden zwei verschiedene Arten von Kieselsäure als disperses Pulver zugegeben.

Zum einen wird eine Kieselsäure zugegeben mit einer mittleren Korngröße von ca. 1 *µ*m bis 10 *µ*m, vorzugsweise zwischen 4 und 6 oder 7 *µ*m; denkbar ist auch ein Bereich von 1 bis 8 oder 9 *µ*m. Diese Kieselsäure dient als Mattierungsmittel, d. h. sie reduziert den Glanz der Oberfläche des ausgehärteten Klebstoffs. Wird die Korngröße deutlich kleiner als 1 *µ*m gewählt, so kommt es nicht zu dem gewünschten Mattierungseffekt. Die Oberfläche erscheint glatt und glänzend. Außerdem wird der Klebstoff-Sirup durch hochdisperses Kieselsäure-Pulver mit einer mittleren Korngröße von weniger als 1 *µ*m stark verdickt, was die Verarbeitung behindert.

Das Mattierungsmittel alleine genügt jedoch nicht, um einen mattierten Eindruck der Oberfläche zu erwecken. Das Mattierungsmittel allein lässt die Oberfläche des ausgehärteten Klebstoffs stumpf erscheinen.

Eine mattierte Oberfläche weist stets eine gewisse Oberflächenrauhigkeit auf. Daher wird zum zweiten eine Kieselsäure zugegeben mit einer mittleren Korngröße größer 10 *µ*m bis ca. 200 *µ*m. Diese Kieselsäure dient als Strukturgeber.

Wird der Strukturgeber alleine dem Klebstoff zugegeben, so erhält man nicht den gewünschten Mattierungseffekt. Die Oberfläche des ausgehärteten Klebstoffs erscheint dann strukturiert seidenglänzend.

Die Korngröße des Strukturgebers bestimmt die Rauhigkeit der Oberfläche des ausgehärteten Klebstoffs. Diese kann an die Rauhigkeit der zu verkleben Kunststoffteile angepasst werden.

Möchte man Kunststoffplatten verkleben, die durch Gießen auf geätztes Glas entstanden sind und daher zwar eine mattierte Oberfläche jedoch mit einer geringen Rauhigkeit aufweisen, so wird vorzugsweise eine Korngröße von 11 oder 12 bis 20 *µ*m, insbesondere 14 bis 18 *µ*m für den Strukturgeber gewählt.

Werden hingegen Kunststoffplatten verklebt, die im Extrusionsverfahren hergestellt wurden und denen Lichtstreuperlen zugesetzt sind, die nach dem Extrudieren und Trocknen an der Oberfläche erscheinen, so wird eine Korngröße des Strukturgebers im Bereich von 25 bis 100 *µ*m, insbesondere 40 bis 80 *µ*m gewählt, angepasst an die durch die Lichtstreuperlen bestimmte Oberflächenrauhigkeit. Als grobe Regel kann gelten, dass die Korngröße etwa der doppelten mittleren Oberflächenrauhigkeit entsprechen sollte.

Wird die Korngröße zu groß gewählt, etwa deutlich größer als 200 *µ*m, so macht die Oberfläche des ausgehärteten Klebstoffs keinen mattierten Eindruck mehr, sondern schlicht einen rauhen Eindruck.

Der erfindungsgemäße Klebstoff ist farblos transluzent. Er ist damit geeignet, alle Platten, unabhängig von ihrer Farbe, zu kleben. Die Klebstoffnaht passt sich in ihrer Farbe optisch an den Untergrund, d. h. an die ggf. verklebten Kunststoffplatten, an.

Aus Design-Gründen ist es auch möglich, den Klebstoff durch geeignete Zusätze einzufärben.

Ferner ist Kieselsäure inert, sie quillt und schäumt nicht.

Bei der Herstellung des Klebstoffs werden die einzelnen Zusätze und sonstigen Komponenten miteinander verrührt. Der zu verrührende so genannte Sirup des Klebstoffs ist zum einen viskos. Zum anderen ist er durch die Zugabe von Kieselsäure auch thixotrop. Beides trägt dazu bei, dass die beim Verrühren der Komponenten mit dem Rührwerk eingetragenen Luftblasen nicht mehr ungehindert entweichen können. Luftblasen in der Klebstofflösung sollten vor dem Einsatz des Klebstoffs wieder aus dem Sirup entfernt werden, da sie ansonsten eine unregelmäßige Struktur des Klebstoffs mit Hohlräumen und Blasen an der Oberfläche von Klebenähten zur Folge hätten. Dies würde sowohl die ästhetische Erscheinungsform als auch die Festigkeit des Klebstoffs beeinträchtigen. Vorzugsweise wird daher dem Klebstoff ein Entschäumer zugefügt und mit dem Sirup vermischt. Dieser bewirkt, dass die entstehenden Blasen relativ schnell an die Oberfläche des Klebstoff-Sirups steigen und dort platzen. Der über eine gewisse Zeit abgestandene Klebstoff-Sirup ist dann blasenfrei.

Häufig werden Entschäumer für lösungsmittelhaltige Lacksysteme eingesetzt. Sie basieren in der Regel auf schaumzerstörenden Polymeren und Polysiloxanen. Besser geeignet sind jedoch Copolymerisate von Alkylvinylethern mit polaren Alkylvinyletherderivaten, wie sie in der EP 0 379 166 beansprucht werden. Für den erfindungsgemäßen Polymerisationsklebstoff werden vorzugsweise schaumzerstörende Polymere gelöst in Diisobutylketon (93 Gew.%) und Stoddard Lösungsmittel (4 Gew.%) eingesetzt, wobei das Stoddard Lösungsmittel Nota P mit weniger als 0,1 Gew.% Benzol verwendet wird. Ein geeigneter handelsüblicher Entschäumer dieser Art, der bevorzugt verwendet wird, ist der Entschäumer BYK 060N, vertrieben durch die BYK-CHEMIE GmbH, Wesel, Deutschland. Von dem Entschäumer werden zwischen 0,3 und 1 Gew.% zugesetzt. Vorzugsweise werden 0,8 bis 1 Gew.% eingesetzt.

Der Einsatz des Entschäumers führt dazu, dass die sich beim Verrühren des Sirups bildenden Blasen zügig an die Oberfläche des Sirups wandern und dort platzen.

Es hat sich bewährt, für das Mattierungsmittel eine pyrogene Kieselsäure einzusetzen. Eine gefällte Kieselsäure als Mattierungsmittel bewirkt einen leichten Gelbstich. Für den Strukturgeber kann sowohl eine gefällte Kieselsäure als auch eine pyrogene Kieselsäure eingesetzt werden. Wird für den Strukturgeber eine gefällte Kieselsäure eingesetzt, führt dies zwar auch zu einem schwachen Gelbstich, jedoch ist er so schwach, dass er toleriert werden kann.

Nachteilig wirken sich auch alle nachbehandelten Kieselsäuren aus. Die auf der Oberfläche aufgebrachten Wachse färben den Klebstoff bei der Aushärtung gelb.

Um den Polymerisationsklebstoff noch weiter an die Oberflächenstruktur der zu klebenden Materialien anzupassen, kann eine Kombination von mindestens zwei Strukturgebern mit unterschiedlicher Korngröße verwendet werden.

Es hat sich als vorteilhaft erwiesen, wenn der Polymerisationsklebstoff 1-10 Gew.% Mattierungsmittel und 1-10 Gew.% Strukturgeber enthält, wobei Mattierungsmittel und Strukturgeber zusammen weniger als 11 Gew.% zum Polymerisationsklebstoff beitragen. Oberhalb des angegebenen Bereichs wird der Klebstoff-Sirup meist zu zähflüssig. Unterhalb des angegebenen Bereichs ist der Mattierungseffekt in der Regel zu gering. Vorzugsweise werden 1 bis 5 Gew.% sowohl des Mattierungsmittels als auch des Strukturgebers zugesetzt. Als ideal hat sich ein Zusatz von 3 Gew.% für beide Substanzen erwiesen.

Der Polymerisationsklebstoff lässt sich insbesondere verwenden zum Herstellen eines Klebeverbunds aus mindestens einem mattierten Gegenstand und einem weiteren Gegenstand. Er eignet sich zum Verkleben von Teilen, die z. B. aus Acrylnitril-Butadien-Styrol (ABS), Celluloseacetatbutyrat (CAB), Polystyrol (PS), Polycarbonat (PC), Polyethylenterephthalatglykol (PETG), Polyvinylchlorid (PVC), Styrol/α -Styrol-Copolymer (S/MS), ungesättigtem Polyester (UP) oder Holz bestehen können, insbesondere aber für Teile aus PMMA.

Im Folgenden wird die Erfindung anhand von Ausführungsbeispielen näher erläutert.

### 1. Ausführungsbeispiel

Als erstes Ausführungsbeispiel wird ein Klebstoff für PMMA-Platten beschrieben, die durch Gießen auf geätztes Glas entstanden sind und daher zwar eine mattierte Oberfläche jedoch mit einer geringen Rauhigkeit aufweisen. Die folgende Rezeptur kam für den Klebstoff zum Einsatz. Die Prozentangaben beziehen sich jeweils auf Gew.%.

| | |
|---|---|
| 52,19% | Methylmethacrylat (flüssiges Monomer) |
| 22,4% | Polymethylmethacrylat |
| 0,01% | Stabilisator (4-Methyl-2,6-di-tert-butylphenol) |
| 0,3% | Beschleuniger (N,N-bis(2-hydroxipropyl)-p-toluidin-Dipropoxi-p-toluidin) |
| 3% | Vernetzer (Tetraethylenglykoldimethacrylat) |
| 0,2% | Regler (2-Ethylenhexylthioglycolat) |
| 0,1% | UV-Licht absorbierender Lichtschutz (2-Hydroxi-4-Methoxibenzophenon) |
| 15% | Verdünner (Methylmethacrylat, flüssiges Monomer) zur Einstellung einer geeigneten Viskosität |
| 3% | Mattierungsmittel (pyrogene Kieselsäure mit einer mittleren Korngröße von 6-7 *µ*m) |
| 3% | Strukturgeber (gefällte Kieselsäure mit einer mittleren Korngröße von 14-18 *µ*m) |
| 0,8% | Entschäumer (auf Basis von Polysiloxan) |

Der Vernetzer unterstützt das Vernetzen der Polymerisationsketten. Der Regler dämpft die Polymerisation, so dass das Molekulargewicht in einem gemäßigten Bereich bleibt. Der Lichtschutz absorbiert UV-Licht und führt zu einer etwas besseren Oberflächenaushärtung.

Der Stabilisator verhindert eine vorzeitige Polymerisation. Diese soll erst im Moment der Verarbeitung stattfinden. Dazu wird dem Klebstoff-Sirup vor der Verarbeitung ein geeigneter Katalysator oder Härter zu etwa 3-6 %, vorzugsweise 3 %, zugesetzt und mit diesem verrührt, bis keine Schlieren mehr sichtbar sind. Ein üblicher Katalysator ist eine 5%ige Lösung von Dibenzoylperoxid in Diisobutylphthalat.

Der Ansatz kann direkt in einem Gefäß zusammen gewogen und anschließend vermischt werden. Für das Dispergieren des Kieselsäure-Pulvers benötigt man einen Dispergierrührer, z. B. mit einer Dissolverscheibe, die Zähne sowohl nach oben als auch unten aufweist. Der Ansatz wird bei ca. 22 °C für 5-10 Min mit 6-8000 Umdrehungen/min gerührt.

Nach Zugabe des Katalysators beträgt die Aushärtungs- bzw. Polymerisationszeit etwa 50 bis 55 Minuten. Die Vikat-Erweichungstemperatur beträgt 78 °C bzw. 95 °C wenn der Klebstoff nach dem Aushärten 5 Stunden bei 80 °C getempert wurde. Der Restmonomergehalt beträgt 3,9 % bzw. 0,5 % nach dem Tempern.

Stumpfverklebung von den genannten PMMA-Platten zeigt eine sehr gut Festigkeit der Klebenaht. Im Belastungstest kommt es nicht zum Bruch der Klebenaht, sondern zum Bruch der verklebten Kunststoffplatten (Materialbruch).

Die Zugscherfestigkeitsmessung in Anlehnung an DIN 53283 an einer 1,2 mm dicken Klebstoffschicht zwischen zwei PMMA-Platten ergab Werte um 40 MPa (Megapascal), also deutlich über dem typischerweise geforderten Wert von 15 MPa.

Die Glanzmessung zum Bestimmen der Mattigkeit nach DIN 67530 ergab für die mattierten PMMA-Platten dieses Ausführungsbeispiels einen Glanz-Wert unter einem Winkel von 20° von 0,3. Für den ausgehärteten Klebstoff ergab sich ein Wert von 0,2. Der Klebstoff ohne Zusatz des Mattierungsmittels und des Strukturgebers zeigt einen Glanz-Wert von 52. Es wurde also eine hervorragende Anpassung an den Glanz der verklebten PMMA-Platten erreicht.

Die Rauhigkeitsmessung nach DIN 4768 an den Oberflächen ergab für die mattierten PMMA-Platten dieses Ausführungsbeispiels eine gemittelte Rauhtiefe von ca. 13 *µ*m. Für den ausgehärteten Klebstoff ergab sich ein Wert von ca. 8 *µ*m. Der Klebstoff ohne Zusatz des Mattierungsmittels und des Strukturgebers zeigt eine Rauhtiefe von 0,15 *µ*m. Auch in dieser Hinsicht wurde eine hervorragende Anpassung an die Eigenschaften der verklebten PMMA-Platten erreicht.

Die geschilderten quantitativen Messungen erlauben eine Optimierung der Zusammensetzung des Klebstoffs zur bestmöglichen Anpassung an das zu verklebende Material.

### 2. Ausführungsbeispiel

Als zweites Ausführungsbeispiel wird ein Klebstoff für PMMA-Platten beschrieben, die im Extrusionsverfahren hergestellt wurden und denen Lichtstreuperlen zugesetzt sind. Derartige Platten weisen eine höhere Oberflächen-Rauhigkeit auf.

Die Rezeptur für den Klebstoff entspricht derjenigen des ersten Ausführungsbeispiels mit der einzigen Abweichung, dass als Strukturgeber eine gefällte Kieselsäure mit einer mittleren Korngröße von 70-1 00 *µ*m verwendet wird.

Nach Zugabe des Katalysators beträgt die Aushärtungs- bzw. Polymerisationszeit etwa 45 Minuten. Die Vikat-Erweichungstemperatur beträgt 77 °C bzw. 97 °C wenn der Klebstoff nach dem Aushärten 5 Stunden bei 80 °C getempert wurde. Der Restmonomergehalt beträgt 4,8 % bzw. 0,7 % nach dem Tempern.

Stumpfverklebung von den genannten PMMA-Platten zeigt ebenfalls eine sehr gut Festigkeit der Klebenaht. Im Belastungstest kommt es wiederum nicht zum Bruch der Klebenaht, sondern zum Bruch der verklebten Kunststoffplatten (Materialbruch).

Die Zugscherfestigkeitsmessung in Anlehnung an DIN 53283 an einer 1,2 mm dicken Klebstoffschicht zwischen zwei PMMA-Platten ergab Werte um 37 MPa, also immer noch deutlich über dem typischerweise geforderten Wert von 15 MPa.

Die Glanzmessung zum Bestimmen der Mattigkeit nach DIN 67530 ergab für die mattierten PMMA-Platten dieses Ausführungsbeispiels einen Glanz-Wert unter einem Winkel von 20° von 1. Für den ausgehärteten Klebstoff ergab sich ein Wert von 0,6. Es wurde also eine hervorragende Anpassung an den Glanz der verklebten PMMA-Platten erreicht.

Die Rauhigkeitsmessung nach DIN 4768 an den Oberflächen ergab für die mattierten PMMA-Platten dieses Ausführungsbeispiels eine gemittelte Rauhtiefe von ca. 23*µ*m. Für den ausgehärteten Klebstoff ergab sich ein Wert von ca. 24 *µ*m. Auch in dieser Hinsicht wurde eine hervorragende Anpassung an die Eigenschaften der verklebten PMMA-Platten erreicht.

## Patentansprüche

1. Polymerisationsklebstoff mit folgenden Zusätzen:
a) Kieselsäure-Pulver mit einer mittleren Korngröße von 1 *µ*m bis 10 *µ*m (Mattierungsmittel); und
b) Kieselsäure-Pulver mit einer mittleren Korngröße von mehr als 10 *µ*m bis 200 *µ*m (Strukturgeber).

2. Polymerisationsklebstoff nach dem vorhergehenden Anspruch,
**gekennzeichnet durch**
den weiteren Zusatz eines Entschäumers.

3. Polymerisationsklebstoff nach einem der vorhergehenden Ansprüche,
**dadurch gekennzeichnet,**
**dass** das Mattierungsmittel eine pyrogene Kieselsäure ist.

4. Polymerisationsklebstoff nach einem der vorhergehenden Ansprüche,
**gekennzeichnet durch**
eine Kombination von mindestens zwei Strukturgebern mit unterschiedlicher Korngröße.

5. Polymerisationsklebstoff nach einem der vorhergehenden Ansprüche,
**dadurch gekennzeichnet,**
**dass** der Polymerisationsklebstoff
1-10 Gew.% Mattierungsmittel und
1-10Gew.% Strukturgeber
enthält, wobei Mattierungsmittel und Strukturgeber zusammen weniger als 11 Gew.% zum Polymerisationsklebstoff beitragen.

6. Polymerisationsklebstoff nach einem der vorhergehenden Ansprüche,
**gekennzeichnet durch**
den Zusatz eines Farbstoffs.

7. Verwendung des Polymerisationsklebstoffs nach einem der vorhergehenden Ansprüche zum Herstellen eines Klebeverbunds aus mindestens einem mattierten Gegenstand und einem weiteren Gegenstand.

8. Verwendung nach dem vorhergehenden Anspruch,
**dadurch gekennzeichnet,**
**dass** der mattierte Gegenstand aus Acrylnitril-Butadien-Styrol (ABS), Celluloseacetatbutyrat (CAB), Polystyrol (PS), Polycarbonat (PC), Polyethylenterephthalatglykol (PETG), Polyvinylchlorid (PVC), Styrol/α -Styrol-Copolymer (S/MS), ungesättigtem Polyester (UP) oder Holz gewählt wird.

## Claims

1. Polymerization adhesive comprising the following additions:
a) silica powder having an average particle size of from 1 µm to 10 µm (matting agent); and
b) silica powder having an average particle size of more than 10 µm up to 200 µm (texturing agent).

2. Polymerization adhesive according to the preceding claim, **characterized by** the further addition of a defoamer.

3. Polymerization adhesive according to one of the preceding claims, **characterized in that** the matting agent is a pyrogenic silica.

4. Polymerization adhesive according to one of the preceding claims, **characterized by** a combination of at least two texturing agents differing in particle size.

5. Polymerization adhesive according to one of the preceding claims, **characterized in that** the polymerization adhesive contains
1-10% by weight of matting agent and
1-10% by weight of texturing agent,
matting agent and texturing agent together contributing less than 11% by weight to the polymerization adhesive.

6. Polymerization adhesive according to one of the preceding claims, **characterized by** the addition of a colorant.

7. Use of the polymerization adhesive according to one of the preceding claims for producing an adhesive bond from at least one matted article and another article.

8. Use according to the preceding claim, **characterized in that** the matted article is chosen from acrylonitrile-butadiene-styrene (ABS), cellulose acetate-butyrate (CAB), polystyrene (PS), polycarbonate (PC), polyethylene terephthalate glycol (PETG), polyvinyl chloride (PVC), styrene/α -styrene copolymer (S/MS), unsaturated polyester (UP) or wood.

## Revendications

1. Adhésif de polymérisation ayant les additifs suivants:
a) une poudre d'acide silicique ayant une granulométrie moyenne de 1 µm à 10 µm (agent de matage); et
b) une poudre d'acide silicique ayant une granulométrie moyenne de plus de 10 µm à 200 µm (agent structurant).

2. Adhésif de polymérisation selon la revendication précédente, **caractérisé par** l'addition supplémentaire d'un agent anti-mousse.

3. Composition selon l'une quelconque des revendications précédentes, **caractérisée en ce que** l'agent de matage est un acide silicique pyrogène.

4. Adhésif de polymérisation selon l'une quelconque des revendications précédentes, **caractérisé par** une combinaison d'au moins deux agents structurants de granulométrie différente.

5. Adhésif de polymérisation selon l'une quelconque des revendications précédentes, **caractérisé en ce que**
l'adhésif de polymérisation contient
1-10% en poids d'agent de matage et
1-10% en poids d'agent structurant,
l'agent de matage et l'agent structurant contribuant ensemble moins de 11% en poids à l'adhésif de polymérisation.

6. Adhésif de polymérisation selon l'une quelconque des revendications précédentes, **caractérisé par** l'addition d'un colorant.

7. Utilisation de l'adhésif de polymérisation selon l'une quelconque des revendications précédentes en vue de la fabrication d'une jonction adhésive entre au moins un article mat et un article supplémentaire.

8. Utilisation selon la revendication précédente,
**caractérisé en ce que**,
l'article mat est sélectionné parmi l'acrylnitrile-butadiène-styrène (ABS), l'acétate-butyrate de cellulose (CAB), le polystyrène(PS), le polycarbonate (PC), le téréphtalateglycol de polyéthylène (PETG), le chlorure de polyvinyle (PVC), le copolymère styrène/α-styrène (S/SMS), le polyester insaturé (UP) ou le bois.
